# EUROPEAN PATENT APPLICATION

(11) **EP 2 141 678 A1**
(43) Date of publication of application: **06.01.2010**
(21) Application number: 07742598.1
(22) Date of filing: 27.04.2007
(51) Int. Cl.: G08G 1/09, G08G 1/16

(54) **DRIVING SUPPORT SYSTEM**

(71) Applicant: Aisin AW Co., Ltd., Anjyo-shi Aichi 444-1192 (JP); Toyota Jidosha Kabushiki Kaisha, Toyota-shi, Aichi 471-8571 (JP)
(72) Inventor: NAKAMURA, Masaki, Okazaki-shi Aichi 444-8564 (JP); ISHIKAWA, Tomoaki, Okazaki-shi Aichi 444-8564 (JP); AISAKA, Osamu, Okazaki-shi Aichi 444-8564 (JP); KANBA, Motoki, Okazaki-shi Aichi 444-8564 (JP); NAKAMURA, Motohiro, Toyota-shi Aichi 471-8571 (JP)
(74) Representative: Kramer, Reinhold
(86) International application number: PCT/JP2007/059163
(87) International publication number: WO 2008/139516

(57) **Abstract**

In a case where it is determined that a road surface marking exists within a specified range from a vehicle 2 (YES at S2), the road surface marking is recognized based on an image that has been acquired by a rear camera 3 (S3), an on-road distance from the vehicle 2 to a control object that is associated with the recognized road surface marking is computed (S5 to S7), and in a case where it has been determined that the on-road distance to the control object has become a specified distance (YES at S8), driving guidance and the vehicle control are performed in accordance with the type of the associated control object (S11).

## Description

### TECHNICAL FIELD

The present invention relates to a driving support device that provides assistance for a user's driving based on an image that is acquired by image acquisition means.

### BACKGROUND ART

For some time, driving support devices have been proposed that prevent vehicle accidents by acquiring road information that is obtained from map data in a navigation device, as well as various types of information having to do with the operation of the vehicle, such as a current position that is specified by GPS or the like, providing notifications and driving assistance to the driver, and intervening in vehicle operation.
Among these sorts of driving support devices are devices that are provided with image acquisition means, such as cameras or the like, on all sides of the vehicle and that provide notifications and perform control of the vehicle based on acquired images, in order to provide the necessary notifications and perform the necessary vehicle control with more precise timing. For example, in Japanese Patent Application Publication No. JP-A-2004-86363, a driving assistance device for a vehicle is described that, when a stop line that is formed on the road on which the vehicle is traveling is detected based on image data that is acquired by a CCD camera that is installed on the vehicle such that it faces forward, provides driving assistance at an intersection based on the detection result. Patent Document 1: Japanese Patent Application Publication No. JP-A-2004-86363 (pages 8 to 10, FIG. 4)

### DISCLOSURE OF THE INVENTION

### Problem to be Solved by the Invention

However, the driving assistance devices for a vehicle that are described in the aforementioned Patent Document 1 use detection means, such as CCD cameras or the like, to detect the stop line directly that is a control object, then provide guidance and perform control of the vehicle in relation to the detected control object, but in cases where these devices have been put to use, issues such as those described below have arisen.

First, in order to provide guidance and perform control of the vehicle in relation to the control object, it is necessary to detect the control object while the distance from the control object to the vehicle is somewhat long, which makes it necessary to use an expensive system such as a high-performance camera that can acquire a clear image of the control object at a long distance. Moreover, even if a high-performance camera is used, there is a limit on the distance at which the control object can be detected, so situations have occurred in which the control object could not be detected in time to provide the necessary guidance and perform the necessary control of the vehicle. Furthermore, the necessary guidance cannot be provided and the necessary control of the vehicle cannot be performed in relation to the control object in a case where the control object cannot be detected for some reason.
In addition, if an attempt is made while the vehicle is in motion to use a camera that is provided on the vehicle to acquire an image of a control object (for example, a stop line) that includes a line segment that is orthogonal to the direction of the vehicle's movement, the control object may become blurred in the acquired image and may not be accurately recognized.

On the other hand, in recent years, vehicles have come on the market that are provided with parking support devices that support a parking operation by the driver of the vehicle by displaying acquired camera images of the area behind the vehicle during parking. Among these parking support devices are devices are known that support the parking operation by the driver of the vehicle by displaying images of the situation in the direction in which the vehicle is moving in reverse, as well as devices that support the parking operation by the driver of the vehicle by computing a curve of predicted movement for the vehicle, based on a signal from a steering angle sensor, then displaying the computed curve of predicted movement superimposed on an acquired camera image like that described above. However, these devices are used only during parking, and there is no particular use for them during ordinary driving. Accordingly, a new application is desired that utilizes the camera that acquires the images of the area behind the vehicle not only during parking, as described above, but also during ordinary driving.

The present invention has been developed to solve the known problems described above, and it is an object of the present invention to provide a driving support device that is capable of indirectly computing an on-road distance to a control object, based on detection of a road surface marking that is formed on the road surface, and is also capable of providing accurate driving assistance in relation to the control object in a variety of circumstances.

### Means for Solving the Problem

In order to achieve the object described above, a driving support device in claim 1 of the present specification includes image acquisition means for acquiring an image of an area around a vehicle on which the image acquisition means is disposed and driving assistance means for assisting driving by a user based on the image that is acquired by the image acquisition means, and the driving support device is characterized by including mark information storage means for storing location information for a road surface marking that is formed on a road surface, road surface marking detection means for detecting the road surface marking that is formed on the road surface on which the vehicle is traveling, based on the image that is acquired by the image acquisition means, and object distance computation means for computing an on-road distance from the vehicle to a control object that is associated with the detected road surface marking, based on the road surface marking that is detected by the road surface marking detection means and on the location information that is stored in the mark information storage means, the driving support device also being **characterized in that** the driving assistance means assists the driving of the user based on the on-road distance from the vehicle to the control object.
Note that in this specification, the term "road surface marking" refers to one of a line, a character, and a symbol that is of a fixed style and is provided on a road surface using paint, raised markers, and similar materials to provide guidance, an inducement, a warning, control, an instruction, or the like that is necessary with respect to road traffic, such as a stop line, a pedestrian crosswalk, or the like, for example.
Further, the term "control object" refers to an object on a road on which driving assistance (for example, guidance with respect to the control object, control of the vehicle, or the like) should be provided to the user, such as an intersection, the entrance to a curve, or the like, for example.

A driving support device according to claim 2 is the driving support device that is described in claim 1, characterized by further including drive control means for performing drive control of the vehicle, and also **characterized in that** the driving assistance means uses the drive control means to perform the drive control of the vehicle, based on the on-road distance from the vehicle to the control object.

A driving support device according to claim 3 is the driving support device that is described in claim 1, characterized by further including driving guidance means for providing to the user guidance that pertains to driving, and also **characterized in that** the driving assistance means uses the driving guidance means to perform the guidance, based on the on-road distance from the vehicle to the control object.

A driving support device according to claim 4 is the driving support device that is described in any one of claims 1 to 3, characterized by further including current position detection means for detecting a current position of the vehicle and road surface marking existence determination means for determining whether a road surface marking exists within a specified range from the current position of the vehicle, based on a detection result of the current position detection means and on the location information that is stored in the mark information storage means, the driving support device also being **characterized in that** the road surface marking detection means performs detection of the road surface marking in a case where it is determined by the road surface marking existence determination means that the road surface marking exists.

### Effects of the Invention

In the driving support device in claim 1 that has the configuration that is described above, the driving assistance is performed with respect to the control object by detecting the road surface marking that is formed on the road surface on which the vehicle is traveling and by computing the on-road distance from the vehicle to the control object that is associated with the detected road surface marking, so it is not necessary to detect a control object such as a stop line, an intersection, or the like directly, and it is possible to compute the on-road distance from the vehicle to the control object accurately in an indirect manner, based on the result of the detection, at an early stage, of the road surface marking that is separated from the control object by a known distance. It is therefore possible to perform control reliably with respect to the control object without requiring an expensive device such as an image acquisition device or the like that uses a front camera to acquire an image of a distant object.
Furthermore, in a case where the control object is detected directly as it is with the known technology, the guidance and control cannot be performed with respect to the control object if the control object cannot be recognized, but when the control object is detected indirectly based on the road surface marking, even in a case where one road surface marking cannot be detected, it is possible to perform the guidance and control with respect to the control object by detecting a different road surface marking that is associated with the same control object.
In addition, because it is possible to specify the position of the vehicle accurately, the timing with which route guidance is provided can be made more accurate with respect to a location along a guidance route where guidance is necessary, such as an intersection or the like.
Moreover, because it is not necessary to acquire an image of the control object directly, there is no concern that the control object will not be accurately recognized due to blurring that occurs when the image is acquired while the vehicle is in motion, even if the control object (for example, a stop line) includes a line segment that is orthogonal to the direction of the vehicle's movement.

In the driving support device in claim 2, the drive control of the vehicle is performed based on the on-road distance from the vehicle to the control object, so it is possible to perform the control reliably in accordance with the type of the control object without requiring an expensive device such as an image acquisition device or the like that uses a front camera to acquire an image of a distant object.

In the driving support device in claim 3, the guidance for driving is provided based on the on-road distance from the vehicle to the control object, so it is possible to provide the guidance reliably in accordance with the type of the control object without requiring an expensive device such as an image acquisition device or the like that uses a front camera to acquire an image of a distant object.

In the driving support device in claim 4, the road surface marking is detected in a case where the road surface marking exists within the specified range from the current position of the vehicle, so the detection processing that uses the image acquisition means can be performed only when it is necessary, and the road surface marking detection processing load on the device can be kept to a minimum. Therefore, the driving support device can be configured from an inexpensive system, without requiring a separate control portion for image processing.

### BRIEF DESCRIPTION OF THE DRAWINGS

[FIG. 1] FIG. 1 is a general configuration diagram of a driving support device according to a first embodiment.
[FIG. 2] FIG. 2 is a block diagram that schematically shows a control system of the driving support device according to the first embodiment.
[FIG. 3] FIG. 3 is a figure that shows a storage area of a road surface marking data base according to the first embodiment.
[FIG. 4] FIG. 4 is an overhead view that shows a vehicle that acquires an image of a road surface marking.
[FIG. 5] FIG. 5 is a side view that shows the vehicle that acquires the image of the road surface marking.
[FIG. 6] FIG. 6 is a schematic diagram that shows an acquired image that has been acquired by a rear camera of the vehicle in the circumstances that are shown in FIGS. 4 and 5.
[FIG. 7A] FIG. 7A is a schematic diagram that shows measurement starting points for a "pedestrian crosswalk ahead" road surface marking.
[FIG. 7B] FIG. 7B is a schematic diagram that shows measurement starting points for a "speed limit 20 km/h" road surface marking.
[FIG. 8] FIG. 8 is a schematic diagram that shows a method for computing an on-road distance from a vehicle to a control object when an image of a road surface marking has been acquired by a rear camera of the vehicle.
[FIG. 9] FIG. 9 is a schematic diagram that shows a method for computing an on-road distance from a vehicle to a control object when an image of a road surface marking has been acquired by a rear camera of the vehicle.
[FIG. 10] FIG. 10 is a schematic diagram that shows a method for computing an on-road distance from a vehicle to a control object when an image of a road surface marking has been acquired by a rear camera of the vehicle.
[FIG. 11] FIG. 11 is a flowchart of a driving support processing program in the driving support device according to the first embodiment.
[FIG. 12] FIG. 12 is a general configuration diagram of a driving support device according to a second embodiment.

### Description of the Reference Numerals

- 1: DRIVING SUPPORT DEVICE
- 2: VEHICLE
- 3: REAR CAMERA
- 5: VEHICLE ECU
- 6: NAVIGATION ECU
- 7: LIQUID CRYSTAL DISPLAY
- 8: SPEAKER
- 9: CURRENT POSITION DETECTION PORTION
- 11: BRAKE ACTUATOR
- 12: ACCELERATOR ACTUATOR
- 42: ROAD SURFACE MARKING DATA BASE

### BEST MODES FOR CARRYING OUT THE INVENTION

A driving support device according to the present invention will be explained in detail below, based on first and second embodiments realizing the present invention, with reference to the drawings.

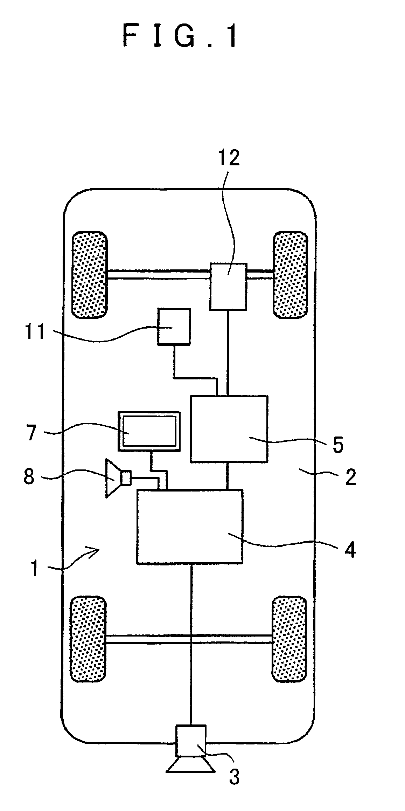

First Embodiment First, a general configuration of a driving support device 1 according to the first embodiment will be explained using FIG. 1. FIG. 1 is a general configuration diagram of the driving support device 1 according to the first embodiment.
As shown in FIG. 1, the driving support device 1 according to the first embodiment is configured from a rear camera (image acquisition means) 3 that is installed on a vehicle 2, a navigation device 4, a vehicle ECU 5, and the like.

The rear camera 3 uses a solid-state imaging element such as a CCD or the like, for example, is attached near the upper middle portion of the license plate that is mounted on the rear of the vehicle 2, and is installed such that its line of sight is directed 45 degrees below horizontal. The rear camera 3 acquires an image of the area to the rear of the vehicle 2, which is the direction in which the vehicle 2 moves during parking, and the acquired image (hereinafter called a back guide monitor (BGM) image) is displayed on a liquid crystal display 7 of the navigation device. On the other hand, during ordinary driving, the rear camera 3 acquires images of road surface markings such as stop lines, pedestrian crosswalks, vehicle speed limits, and the like that are formed on the road surface in the vicinity of the vehicle 2, as described later. Further, distances from the vehicle 2 to control objects that are objects with respect to which driving guidance is provided and control of the vehicle is performed, for stop lines, intersections, entrances to curves, and the like, are computed indirectly based on the acquired images of the road surface markings.

The navigation device 4 is configured from a navigation ECU (electronic control unit) 6, the liquid crystal display (driving guidance means) 7, which is provided on one of a center console and a panel face in the cabin of the vehicle 2 and displays a map and a searched route to a destination, a speaker (driving guidance means) 8 that outputs voice guidance that pertains to route guidance, a current position detection portion (current position detection means) 9 that specifies the current position and the direction of movement of the vehicle 2 on a map, a data storage portion 10 in which are stored map data for displaying maps and information that pertains to the types and locations of the road surface markings that are formed on the road surface, and a communication device 13 for performing communications with an information center and the like.
The navigation ECU (driving assistance means, road surface marking means, object distance computation means, road surface marking existence determination means) 6 is an electronic control unit that, in addition to ordinary route search and route guidance processing, also performs detection processing that detects, based on an acquired image that has been acquired by the rear camera 3, a road surface marking that is formed on the surface of the road on which the vehicle 2 is traveling, performs computation processing that indirectly computes, based on the detected road surface marking, an on-road distance from the vehicle 2 to a control object such as a stop line, an intersection, an entrance to a curve, or the like, performs vehicle 2 drive control command and route guidance processing that is based on the computed distance, and the like. Note that a detailed configuration of the navigation ECU 6 will be described later.

The vehicle ECU 5 is an electronic control unit of the vehicle 2 that controls the operation of the engine, the transmission, the accelerator, the brakes, and the like, and it is connected to a brake actuator (drive control means) 11 and an accelerator actuator (drive control means) 12. Further, in a case where a specified condition is satisfied, the navigation ECU 6 transmits control signals to the brake actuator 11 and the accelerator actuator 12 through the vehicle ECU 5, varying the brake pressure and the amount of air that the engine takes in, and automatically applying braking force.

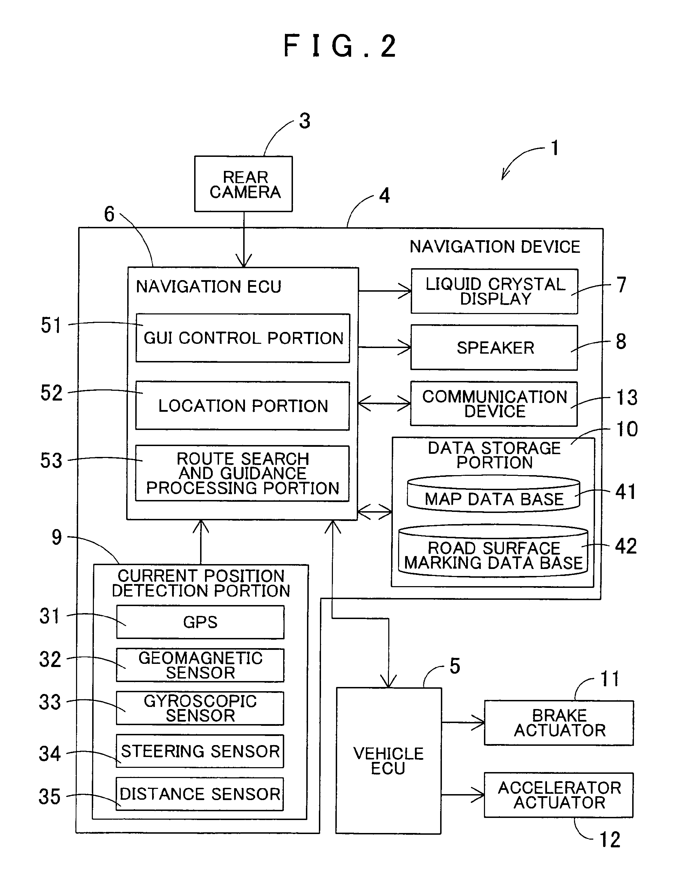

Next, a configuration of a control system of the driving support device 1 according to the first embodiment will be explained based on FIG. 2, focusing on the navigation device 4 in particular. FIG. 2 is a block diagram that schematically shows the control system of the driving support device 1 according to the first embodiment.
In FIG. 2, the control system of the driving support device 1 is basically configured from the navigation device 4 and the vehicle ECU 5, and specified peripheral devices are connected to various control means.

Hereinafter, to explain various configuring elements that configure the navigation device 4, the current position detection portion 9 includes a GPS 31, a geomagnetic sensor 32, a gyroscopic sensor 33, a steering sensor 34, a distance sensor 35, an advanced meter (not shown in the drawings), and the like, and is capable of detecting the vehicle's current position and heading, and a travel distance from specific locations, and the like.

Specifically, the GPS 31 detects the current position of the vehicle on the Earth and the current time by receiving radio waves that are generated by manmade satellites, and the geomagnetic sensor 32 detects the vehicle's heading by measuring geomagnetism.

The gyroscopic sensor 33 detects a turning angle of the vehicle. Here, a gas rate gyroscope, a vibrating gyroscope, or the like, for example, may be used as the gyroscopic sensor 33. Further, the vehicle's heading can be detected by finding the integral of the turning angle that is detected by the gyroscopic sensor 33.

The steering sensor 34 detects the steering angle of the vehicle. Here, an optical rotation sensor and a rotation resistance sensor that are mounted on a rotating portion of the steering wheel (not shown in the drawings), an angle sensor that is mounted on a wheel of the vehicle, or the like, for example, may be used as the steering sensor 34.

The distance sensor 35 detects a travel distance (a cumulative travel distance) based on vehicle speed pulses that are generated by the engine at fixed travel distance intervals.

The data storage portion 10 is provided with a hard disk (not shown in the drawings) as an external storage device and a storage medium, as well as a recording head (not shown in the drawings) for reading a specified program, a map data base 41 in which is stored information, such as map data and the like, that is necessary for route searches and map displays, a road surface marking data base (mark information storage means) 42 in which is stored information that pertains to road surface markings, and the like, all of which are stored on the hard disk, and for writing specified data to the hard disk. Note that in the first embodiment, the hard disk is used as the external storage device and the storage medium of the data storage portion 10, but a magnetic disk other than the hard disk, such as a flexible disk or the like, can also be used as the external storage device. A memory card, a magnetic tape, a magnetic drum, a CD, and MD, a DVD, an optical disk, an MO, a smart card, an optical card, or the like can also be used as the external storage device.

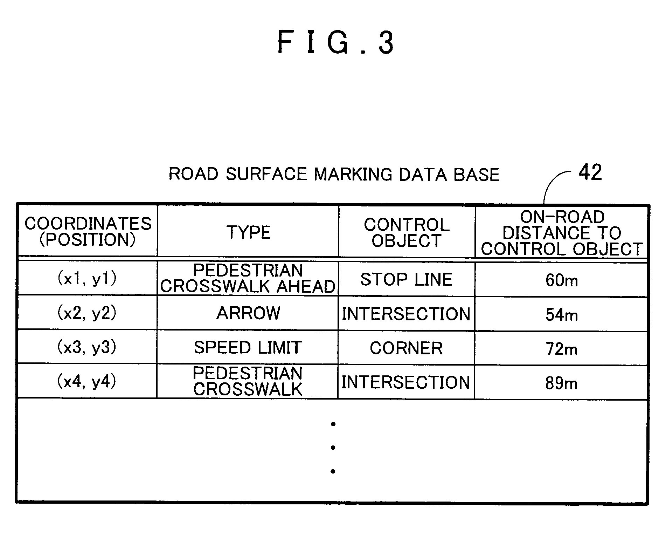

Various types of information that are necessary for route searches and map displays are stored in the map data base 41, such as map data for displaying maps, intersection data that pertains to various intersections, node data that pertains to node points, road data that pertains to roads, search data for searching for routes, facilities data that pertains to facilities, search data for searching for locations, and the like, for example. In addition, in the navigation device 4 according to the first embodiment, the types of road surface markings that are formed on road surfaces (for example, stop lines, pedestrian crosswalks, speed limits), identification information for identifying the type of a detected road surface marking, and coordinate data that identifies the position of a road surface marking on the map are stored in the road surface marking data base 42. Note that the road surface marking data base 42 will be explained in detail later using FIG. 3.

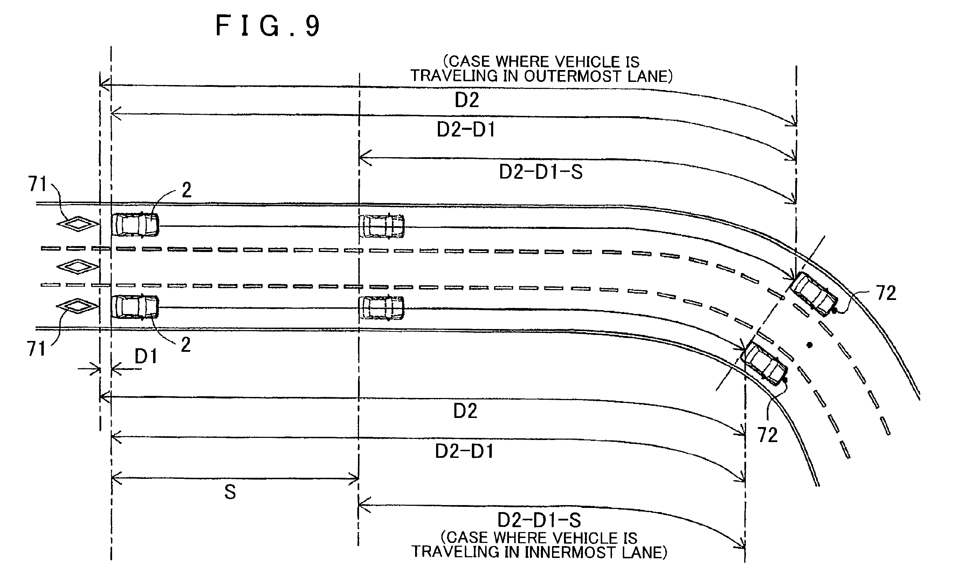

The navigation ECU 6, in addition to being provided with a CPU that serves as a computation device and a control device that performs control of the entire navigation device 4, is provided with internal storage devices such as a RAM that is used as a working memory in various types of processing that the CPU performs and in which are stored route data and the like that are used when route searching is performed, and a ROM in which are stored, in addition to a control program, a route guidance processing program that performs a search for a route to a destination and provides guidance along a guidance route that is found, and a driving support processing program (refer to FIG. 9) that is described later and that computes an on-road distance to a control object (a stop line, an intersection, an entrance to a curve, or the like), based on an image that has been acquired by the rear camera 3, and provides driving assistance. Note that a semiconductor memory, a magnetic core, and the like may be used as the RAM, the ROM, and the like. Furthermore, an MPU or the like can be used instead of the CPU as the computation device and the control device.

The navigation ECU 6 is also provided with a GUI control portion 51, a location portion 52, and a route search and guidance processing portion 53 and performs various types of processing based on information it has acquired from the rear camera 3, the current position detection portion 9, the data storage portion 10, and various peripheral devices.

Here, the GUI control portion 51 displays on the liquid crystal display 7 a map image that is suited to the area around the vehicle, based on map data that is read from the map data base 41 and the current position of the vehicle that has been detected by the location portion 52, and in a case where route guidance is required, also synthesizes and displays an icon, a guidance screen, a located route, and the like in the map image on the liquid crystal display 7.
The location portion 52 detects the current absolute position (latitude, longitude) of the vehicle 2, based on various types of information that are supplied by the current position detection portion 9. The location portion 52 also determines, based on the detected current position and on information that is stored in the road surface marking data base 42, whether or not a road surface marking exists within a specified range (from 30 meters ahead to 20 meters behind) from the vehicle 2, and in a case where a road surface marking does exist, the location portion 52 detects the road surface marking on the road surface by importing and performing analytical processing of an image that has been acquired by the rear camera 3. The location portion 52 also computes the distance between the vehicle 2 and the road surface marking that has been detected from the acquired image, then based on that distance, computes the distance to a control object that is associated with the road surface marking, performs drive control of the vehicle 2 by controlling the brake actuator 11 and the accelerator actuator 12 in accordance with the computed distance, and also provides driving guidance through the liquid crystal display 7 and the speaker 8.
In a case where a destination has been set, the route search and guidance processing portion 53 searches for a route from the current position to the destination, based on the node point data and the search data that are stored in the data storage portion 10, and also provides route guidance along a set guidance route, using the liquid crystal display 7 and the speaker 8.

Furthermore, various peripheral devices, such as the liquid crystal display 7, the speaker 8, the communication device 13, and the like, are electrically connected to the navigation ECU 6.

The liquid crystal display 7 displays operation guidance, guidance on operation menus and keys, the guidance route from the current position to the destination, guidance information along the guidance route, traffic information, news, weather forecasts, the time, e-mail, television programs, the BGM image that has been acquired by the rear camera 3, and the like. Note that instead of the liquid crystal display 7, a CRT display, a plasma display, or the like can be used, and a hologram device or the like that projects a hologram onto the front windshield of the vehicle can also be used.

The speaker 8 outputs voice guidance that guides driving along the guidance route based on a command from the navigation ECU 6. Here, the provided voice guidance may be, for example, "Please turn right at the intersection 200 meters ahead," "National Route No. XX is congested ahead," or the like. Note that in addition to a synthesized voice, the audio that is output by the speaker 8 can also include sound effects and various types of information that are recorded in advance on tape, in memory, or the like. Furthermore, in the navigation device 4 according to the first embodiment, in a case where the distance from the vehicle to a control object has become a specified distance, driving guidance that pertains to the control object (for example, a warning that the vehicle is approaching a stop line or the like) is provided by the liquid crystal display 7 and the speaker 8.

The communication device 13 is a beacon receiver that receives, in the form of a radio beacon, an optical beacon, or the like that is received through a radio beacon device, an optical beacon device, or the like that is provided along the road, congestion information, regulatory information, parking space information, and traffic accident information, as well as traffic information that includes various types of information, such as states of congestion at service areas and the like, all of the information being transmitted from an information center, such as the Vehicle Information and Communication System (VICS (registered trademark)) center or the like, for example. The communication device 13 may also be a network device that is capable of communicating in a communication system of a communication network such as a LAN, a WAN, an intranet, a mobile telephone network, a telephone network, a public communication network, a dedicated communication network, the Internet, or the like. In addition to the information from the information center, the communication device 13 receives FM multiplex information that includes information such as news, weather forecasts, and the like, the information being received in the form of FM multiplex broadcasts through an FM broadcasting station by an FM receiver with which the communication device 13 is also provided. Note that the beacon receiver and the FM receiver are combined into a single unit that is provided as a VICS receiver, but they can also be provided separately. The navigation device 4 according to the first embodiment updates the information that is stored in the map data base 41 and the road surface marking data base 42 by connecting to the information center through the communication device 13.

Next, the road surface marking data base 42 in the data storage portion 10, in which is stored the information that pertains to the road surface markings, will be explained based on FIG. 3. FIG. 3 is a figure that shows a storage area of the road surface marking data base 42 according to the first embodiment.

As shown in FIG. 3, the storage area of the road surface marking data base 42 the coordinates (the position) of the road surface marking in the map data, the type of the road surface marking, the control object that is associated with the road surface marking, and the on-road distance to the control object from a measurement starting point for the road surface marking (in a case where there is a plurality of measurement starting points, the measurement starting point that is closest to the control object). For example, in FIG. 3, a "pedestrian crosswalk ahead" road surface marking is formed at the coordinates (x1, y1), and a "stop line" road surface marking that serves as a control object is located 60 meters further ahead and is associated with the "stop line" road surface marking. An "arrow" road surface marking is formed at the coordinates (x2, y2), and an intersection (an intersection node) that serves as a control object is located 54 meters further ahead and is associated with the "arrow" road surface marking. A "speed limit" road surface marking is formed at the coordinates (x3, y3), and a corner (a corner starting point node) that serves as a control object is located 72 meters further ahead and is associated with the "speed limit" road surface marking. A "pedestrian crosswalk" road surface marking is formed at the coordinates (x4, y4), and an intersection (an intersection node) that serves as a control object is located 89 meters further ahead and is associated with the "pedestrian crosswalk" road surface marking.
With regard to the on-road distance to the control object, note that in a case where the road includes a plurality of lanes, an on-road distance to the control object is stored for each lane.

Here, the control object is an object with respect to which driving guidance and control of the vehicle are performed, and a node point or another road surface marking that exists at a specified interval (for example, 10 to 200 meters) from the road surface marking in the direction in which the vehicle is advancing on the road on which the road surface marking is formed is used as the control object. When the rear camera 3 has acquired an image of any one of the road surface markings that are stored in the road surface marking data base 42, the navigation ECU 6 indirectly computes the on-road distance to the associated control object based on the acquired image, and in a case where the on-road distance is within a specified distance, the navigation ECU 6 performs drive control of and provides driving guidance for the vehicle 2.

The nature of the drive control of and the driving guidance for the vehicle 2 varies according to the type of the associated control object, and in a case where the associated control object is a stop line, for example, at the point when the on-road distance to the stop line becomes 50 meters, a character string that says "Approaching stop line" to indicate that the vehicle 2 is approaching the stop line is displayed on the liquid crystal display 7, and a warning to the same effect is output by voice from the speaker 8. In a case where deceleration is not performed at that point, deceleration control is performed by controlling the brake actuator 11 such that the vehicle 2 stops before it reaches the stop line.

In a case where the associated control object is an intersection, at the point when the on-road distance to the node for that intersection becomes 10 meters, route guidance is performed in accordance with the set guidance route. For example, a guidance display that indicates a left turn may be displayed on the liquid crystal display 7, and voice guidance that says "Please turn left at the next intersection" may be output from the speaker 8. With regard to a case in which a guidance route has not been set, note that no particular guidance display or voice guidance is output.

In a case where the associated control object is a corner, at the point when the on-road distance to the node of the starting point of the corner becomes 50 meters, acceleration and deceleration control is performed by controlling the brake actuator 11 and the accelerator actuator 12 such that the vehicle speed before the entrance to the corner becomes the optimum speed for the radius of curvature of the corner (for example, a speed of 40 km/h for a radius of curvature of 30), the radius of curvature being stored in the map data base 41. The acceleration and deceleration control by controlling the brake actuator 11 and the accelerator actuator 12 is also performed in the same manner while cornering is in progress, such that the optimum speed maintained.

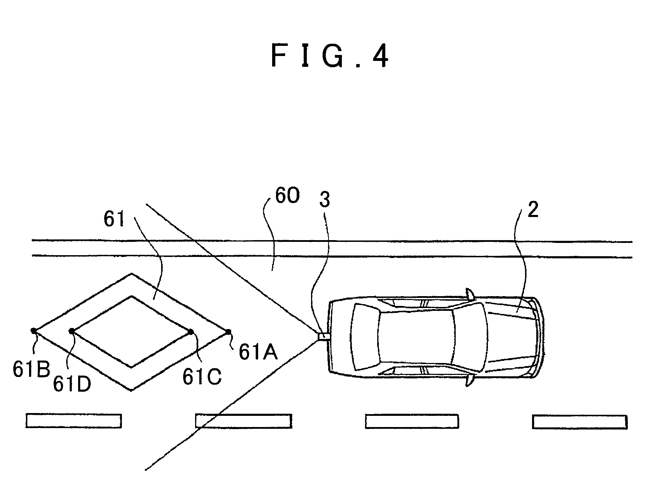

Next, using FIGS. 4 to 8, the method by which the distance between the vehicle 2 and the road surface marking and the distance between the vehicle 2 and the control object that is associated with the road surface marking are computed when the image of the road surface marking is acquired by the rear camera 3 of the vehicle 2 will be explained using a specific example.
In the specific example below, a case is shown in which, among the road surface markings that are formed on a road surface 60 on which the vehicle 2 travels, an image is acquired of a particular "pedestrian crosswalk ahead" road surface marking 61, with which a stop line road surface marking 69 is associated as the control object.

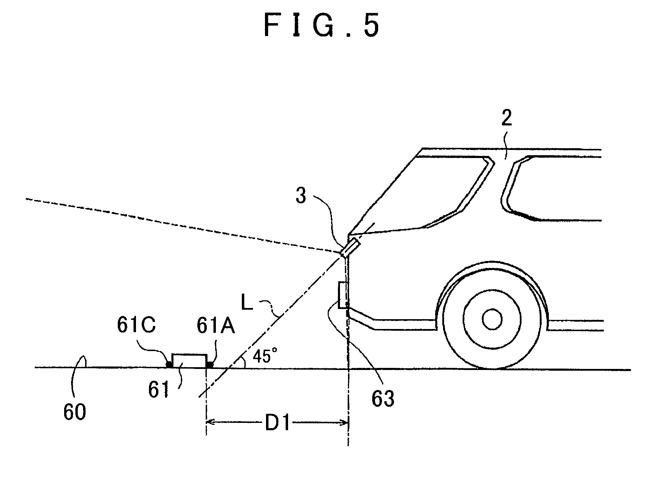

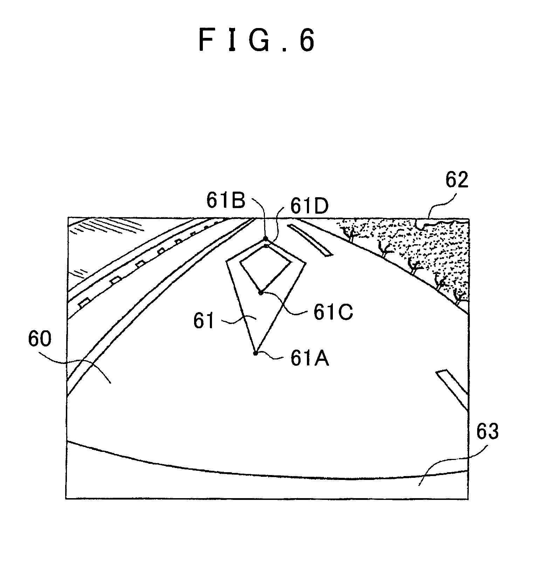

FIG. 4 is an overhead view that shows the vehicle 2 that acquires the image of the road surface marking 61, FIG. 5 is a side view that shows the vehicle 2 that acquires the image of the road surface marking 61, and FIG. 6 is a schematic diagram that shows an acquired image 62 that has been acquired by the rear camera 3 of the vehicle 2 in the circumstances that are shown in FIGS. 4 and 5.

As shown in FIG. 5, the rear camera 3 is mounted in the vicinity of a rear bumper 63 of the vehicle 2 such that its optical axis L is directed 45 degrees below horizontal and it can acquire an image of the area behind the vehicle 2, and its image acquisition range is fixed. Therefore, it is possible to calculate the distance to the photographed object based on the position of the image data (specifically, the number of pixels from the bottom edge) in the image that has been acquired by the rear camera 3 and that is shown in FIG. 6.

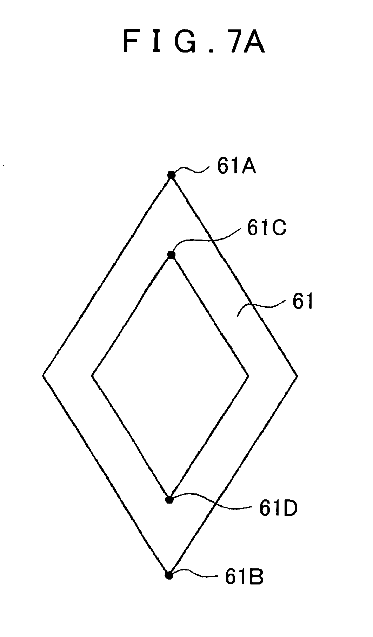

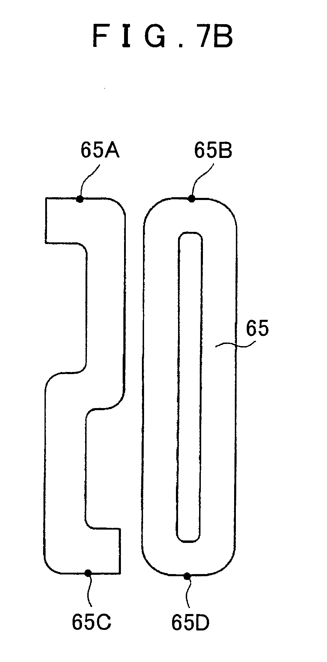

In the road surface marking, a plurality of measurement starting points are defined in advance for the purpose of measuring the distance from the vehicle 2, and the distance to the measurement starting point that is on the side of the road surface marking that is farthest toward the direction of movement is treated as the distance from the vehicle 2 to the road surface marking. For example, FIG. 7A is a schematic diagram that shows measurement starting points 61A to 61D for the "pedestrian crosswalk ahead" road surface marking 61, and FIG. 7B is a schematic diagram that shows measurement starting points 65A to 65D for a "speed limit 20 km/h" road surface marking 65.
As shown in FIGS. 7A and 7B, the plurality of the measurement starting points for the road surface markings are provided at corner portions and end portions of lines (boundary lines) that form the road surface markings, and the measurement starting points have a characteristic arrangement for each of the road surface markings. Further, when the image of the road surface marking has been acquired, the navigation ECU 6 can determine the type of the road surface marker by identifying the boundary lines and the measurement starting points of the road surface marking based on the acquired road surface marking image.

A distance D1 between the vehicle 2 and the measurement starting point can be computed based on the position of the of the measurement starting point (specifically, the number of pixels from the bottom edge to the measurement starting point) in the acquired image of the road surface marking that is shown in FIG. 6. Which one of the plurality of the measurement starting points becomes the measurement starting point for which the distance is computed is determined separately for each of the road surface markings, and for the "pedestrian crosswalk ahead" road surface marking 61 that is shown in FIG. 7A, for example, the distance to the measurement starting point 61 A is computed. However, in a case where the measurement starting point 61A cannot be identified for some reason (for example, a situation in which a portion of the white line is obscured by an obstruction such as sand, standing water, or the like, or a case in which the paint for a portion of the white line has peeled off due to deterioration resulting from many years of use), the distance to the measurement starting point 61B is computed first, and then the distance to the measurement starting point 61A is computed indirectly by using the distance between the measurement starting point 61A and the measurement starting point 61B. Furthermore, in a case where the measurement starting point 61B also cannot be used, the measurement starting point 61C is used, and in a case where the measurement starting point 61C also cannot be used, the measurement starting point 61D is used.

For the "speed limit 20 km/h" road surface marking 65 that is shown in FIG. 7B, the distance to the measurement starting point 65A and the distance to the measurement starting point 65B are computed. However, in a case where the measurement starting point 65A and the measurement starting point 65B cannot be identified for some reason (for example, a situation in which a portion of the white line is obscured by an obstruction such as sand, standing water, or the like, or a case in which the paint for a portion of the white line has peeled off due to deterioration resulting from many years of use), the distance to the measurement starting point 65A and the distance to the measurement starting point 65B are computed indirectly by using the distance to the measurement starting point 65C and the distance to the measurement starting point 65D.

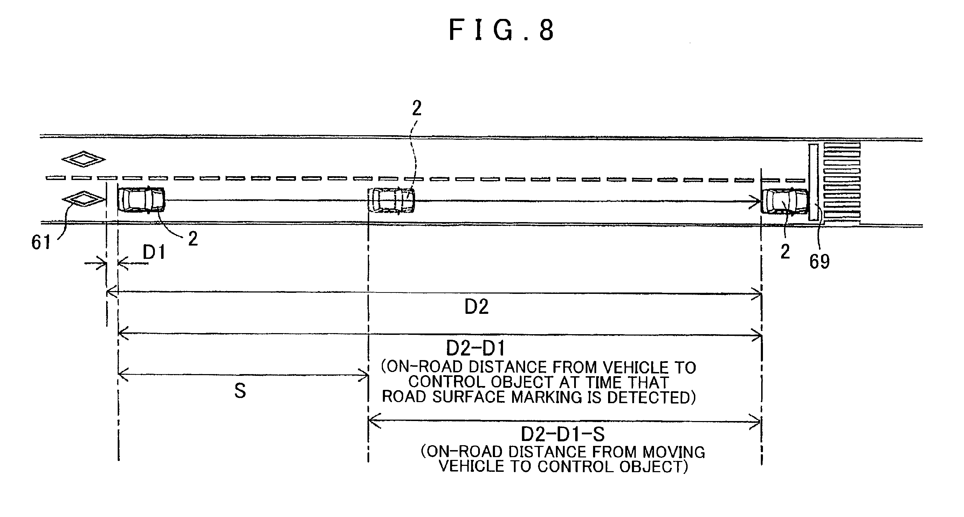

At the same time, if the distance D1 from the vehicle 2 to the measurement starting point of the road surface marking has been computed by the method that is described above, the on-road distance from the vehicle 2 to the control object (refer to FIG. 3) that is associated with the detected road surface marking can be computed based on the distance D 1. FIG. 8 is a schematic diagram that shows a method for computing the on-road distance from the vehicle 2 to the control object when the image of the road surface marking has been acquired by the rear camera 3 of the vehicle 2.

FIG. 8 shows the case in which the "pedestrian crosswalk ahead" road surface marking 61 has been detected by the rear camera 3 of the vehicle 2, and the "stop line" road surface marking 69, which is located further ahead at a distance D2, is the control object that is associated with the road surface marking 61.
In this case, the on-road distance (D2 - D1) from the vehicle 2 to the control object at the time that the road surface marking 61 is detected can be computed by subtracting the distance D1 from the distance D2. Using the distance sensor 35, the navigation ECU 6 also computes a travel distance S that the vehicle 2 travels, based on the vehicle speed pulses that are generated by the engine at fixed travel distance intervals. Further, the on-road distance (D2 - D1 - S) from the moving vehicle 2 to the control object can be computed by subtracting the travel distance S from the distance (D2 - D1) from the vehicle 2 to the control object. The brake pressure can then be regulated by controlling the brake actuator 11, based on the computed on-road distance (D2 - D1 - S) to the "stop line" road surface marking 69, such that the vehicle 2 is stopped at the stop line.

FIG. 9 shows, as another concrete example, a case in which the vehicle 2 is traveling on a road that is configured from three lanes and an on-road distance to a corner starting point 72 that is a control object is computed based on detection of a road surface marking 71. Here, on a road that has a plurality of lanes, the control object (in FIG. 9, the corner starting point 72) that is associated with the road surface marking 61 is located at an on-road distance D2 that follows the curve of each lane (the distance D2 becoming longer as the lane is further toward the outside of the curve).
In a case where the "pedestrian crosswalk ahead" road surface marking 71 has been detected by the rear camera 3 of the vehicle 2, as shown in FIG. 9, the on-road distance (D2 - D1) that follows the curve from the vehicle 2 to the control object at the time that the road surface marking 71 is detected can be computed by subtracting the distance D1 from the distance D2. Using the distance sensor 35, the navigation ECU 6 also computes the travel distance S that the vehicle 2 travels, based on the vehicle speed pulses that are generated by the engine at fixed travel distance intervals. Further, the on-road distance (D2 - D1 - S) that follows the curve from the moving vehicle 2 to the control object can be computed by subtracting the travel distance S from the distance (D2 - D1) from the vehicle 2 to the control object.

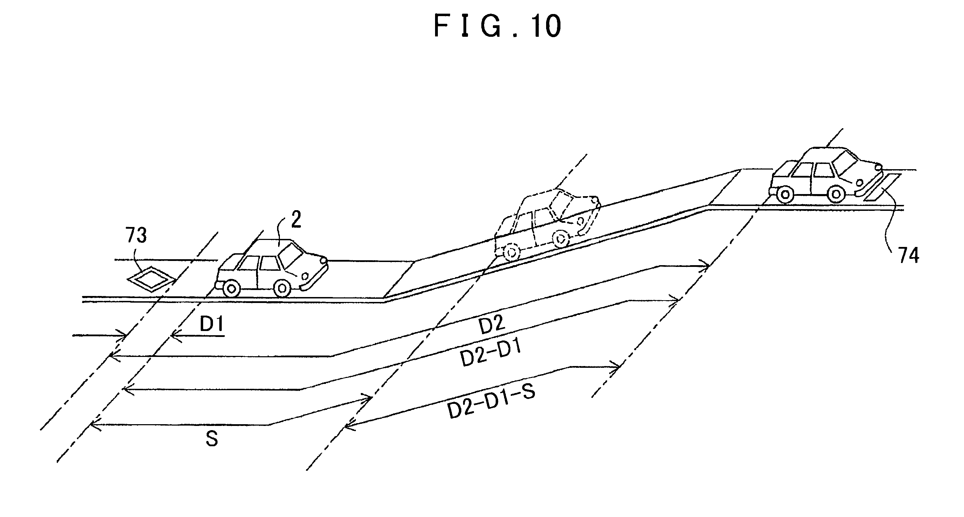

FIG. 10 shows, as yet another concrete example, a case in which the vehicle 2 is traveling on a road that is configured from an uphill slope and an on-road distance to a "stop line" road surface marking 74 that is a control object is computed based on detection of a road surface marking 73. Here, the control object "stop line" road surface marking 74 that serves as the control object that is associated with the road surface marking 73 is located at an on-road distance D2 that follows the slope.
In a case where the "pedestrian crosswalk ahead" road surface marking 73 has been detected by the rear camera 3 of the vehicle 2, as shown in FIG. 10, the on-road distance (D2 - D1) that follows the slope from the vehicle 2 to the control object at the time that the road surface marking 73 is detected can be computed by subtracting the distance D1 from the distance D2. Using the distance sensor 35, the navigation ECU 6 also computes the travel distance S that the vehicle 2 travels, based on the vehicle speed pulses that are generated by the engine at fixed travel distance intervals. Further, the on-road distance (D2 - D1- S) that follows the slope from the moving vehicle 2 to the control object can be computed by subtracting the travel distance S from the distance (D2 - D1) from the vehicle 2 to the control object.

As described above, the control object is not recognized directly, but because the on-road distance to the control object that is located ahead from the road surface marking that is detected by the rear camera 3 is computed indirectly, it is possible to compute the on-road distance (D2 - D1 - S) to the control object accurately at an early stage. Based on the accurately computed on-road distance (D2 - D1- S) to the control object, control of the vehicle can be performed more appropriately, and driving guidance can be provided with more precise timing.

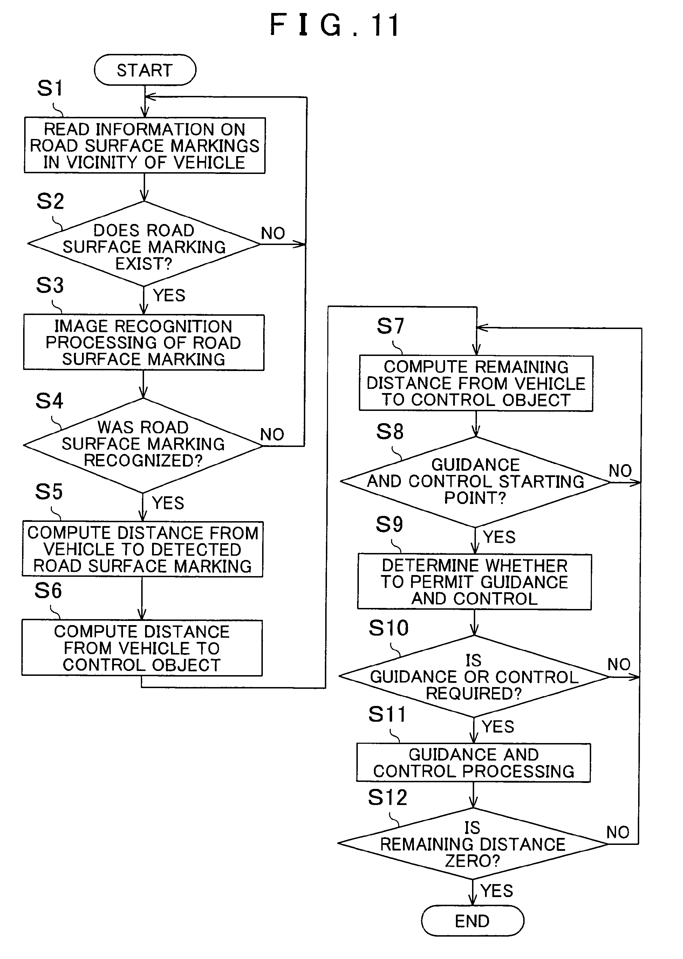

Next, the driving support processing program that is executed by the navigation ECU 6 of the driving support device 1 according to the first embodiment, which has the configuration that is described above, will be explained based on FIG. 11. FIG. 11 is a flowchart of the driving support processing program in the driving support device 1 according to the first embodiment. Here, the driving support processing program performs control that detects a road surface marking based on an image that is acquired by the rear camera 3 while the vehicle 2 is traveling on a road, detects an on-road distance between the vehicle and a control object based on the detected road surface marking, and assists the driving of a user based on the distance. Note that the driving support processing program that is shown in the flowchart in FIG. 11 is stored in the ROM and the RAM that are provided in the navigation ECU 6 and is executed by the CPU.

In the driving support processing, first, at step (hereinafter abbreviated as "S") 1, the navigation ECU 6 reads information from the road surface marking data base 42 on the road surface markings that are located in the vicinity of the vehicle 2 (in the first embodiment, from 2000 meters ahead to 500 meters behind the vehicle 2), based on information on the current position of the vehicle 2 that has been detected by the current position detection portion 9 and on road surface marking location information that is stored in the road surface marking data base 42 (refer to FIG. 3).

Next, at S2, the program determines whether or not the road surface markings for which the information was read at S1 include a road surface marking that is located within a specified range from the vehicle 2 (from 30 meters ahead to 20 meters behind the vehicle 2). In a case where it is determined that a road surface marking is located within the specified range from the vehicle 2 (YES at S2), the program proceeds to S3 and performs image recognition processing for the road surface marking. On the other hand, in a case where it is determined that a road surface marking is not located within the specified range from the vehicle 2 (NO at S2), the program returns to S1 and once again performs the reading of the information on the road surface markings based on the current position. Note that S2 is equivalent to processing by the road surface marking existence determination means.

In the image recognition processing for the road surface marking at S3, the image of the area to the rear of the vehicle 2 that has been acquired by the rear camera 3 is imported and analytical processing of the image is performed to identify the boundary lines and the measurement starting points for the road surface marking that is formed on the surface of the road on which the vehicle 2 is traveling, and to identify the type of the road surface marking.
Specifically, the image that has been acquired by the rear camera 3 is first input using one of analog communication means such as NTSC and digital communication means such as i-link, and is then converted to a digital image format such as jpeg, mpeg, or the like. Next, the fact that road surface markings are generally white lines or yellow lines is utilized to perform brightness correction based on a difference in brightness between the road surface on which the road surface marking is drawn in the acquired image and the rest of the road surface. Then the boundary lines between the road surface marking and the rest of the road surface, as well as the measurement starting points, are detected by performing binarization processing that separates the road surface marking in question from the image, geometric processing that corrects distortion, and smoothing processing that removes noise from the image.
Next, the type of the detected road surface marking is identified based on the arrangement of the detected boundary lines and the measurement starting points, and a determination is made as to whether or not the identified type of the road surface marking matches the type of the road surface marking whose existence within the specified range from the vehicle was determined at S2. Note that S3 is equivalent to processing by road surface marking detection means.

Next, at S4, a determination is made as to whether or not the road surface marking has been recognized, and in a case where it is determined that the road surface marking has been recognized (YES at S4), that is, in a case where it is determined that the road surface marking was detected in the acquired image and that the detected road surface marking matches the type of the road surface marking whose location within the specified range from the vehicle was determined at S2, the program proceeds to S5. On the other hand, in a case where it is determined that the road surface marking has not been recognized (NO at S4), that is, in a case where it is determined that the road surface marking was not detected in the acquired image or that the detected road surface marking does not match the type of the road surface marking whose location within the specified range from the vehicle was determined at S2, the program returns to S1 and once again performs the reading of the information on the road surface markings based on the current position.

At S5, the program computes the distance between the vehicle 2 and the road surface marking that was detected at S3. Specifically, the program computes the distance D1 between the vehicle 2 and the measurement starting point, based on the position of the identified measurement starting point (specifically, the number of pixels from the bottom edge to the measurement starting point) in the acquired image of the road surface marking (refer to FIG. 6).

Next, at S6, the program computes the on-road distance (D2 - D1) from the vehicle 2 to the control object that is associated with the detected road surface marking (refer to FIG. 8), based on the distance D1 between the vehicle 2 and the measurement starting point that was computed at S5 and on the on-road distance D2 to the control object that is associated with the detected road surface marking (the value of D2 is stored in the road surface marking data base 42 in advance; refer to FIG. 3).

Next, at S7, the program uses the distance sensor 35 to compute the travel distance S that the vehicle 2 has traveled from the point where the road surface marking was detected, based on the vehicle speed pulses that are generated by the engine at fixed travel distance intervals, and the program computes the remaining on-road distance (D2 - D1 - S) from the moving vehicle 2 to the control object based on the on-road distance (D2 - D1) from the vehicle 2 to the control object that was computed at S6. Note that the processing at S5 to S7 is equivalent to processing by the object distance computation means.

At S8, a determination is made, based on the remaining on-road distance (D2 - D1 - S) to the control object that was computed at S7, as to whether or not the vehicle 2 has reached a guidance and control starting point that is set separately for each type of control object. For example, in a case where the associated control object is a "stop line", it is determined that the guidance and control starting point has been reached if the remaining distance is not greater than 50 meters. In a case where the associated control object is an "intersection", it is determined that the guidance and control starting point has been reached if the remaining distance is not greater than 10 meters. In a case where the associated control object is a "corner", it is determined that the guidance and control starting point has been reached if the remaining distance is not greater than 50 meters.

In a case where it has been determined that the vehicle 2 has reached the guidance and control starting point (YES at S8), a determination is made as to whether or not driving guidance and drive control of the vehicle 2 are necessary with respect to the control object, based on the current speed of the vehicle, whether or not a destination has been set, and the like (S9). In the driving support device 1 according to the first embodiment, in a case where the associated control object is a stop line, at the point when the on-road distance to the stop line becomes 50 meters, a character string that says "Approaching stop line" to indicate that the vehicle 2 is approaching the stop line is displayed on the liquid crystal display 7, and a warning to the same effect is output by voice from the speaker 8. In a case where deceleration is not performed at that point, deceleration control is performed by controlling the brake actuator 11 such that the vehicle 2 stops before it reaches the stop line.
In a case where the associated control object is an intersection, at the point when the on-road distance to the node for that intersection becomes 10 meters, route guidance is performed in accordance with the set guidance route. For example, a guidance display that indicates a left turn may be displayed on the liquid crystal display 7, and voice guidance that says "Please turn left at the next intersection" may be output from the speaker 8.
In a case where the associated control object is a corner, at the point when the on-road distance to the node of the starting point of the corner becomes 50 meters, acceleration and deceleration control is performed by controlling the brake actuator 11 and the accelerator actuator 12 such that the vehicle speed before the entrance to the corner becomes the optimum speed for the radius of curvature of the corner (for example, a speed of 40 km/h for a radius of curvature of 30), the radius of curvature being stored in the map data base 41.

Therefore, in a case where the vehicle 2 is already traveling at the optimum speed, the program determines that it is not necessary to perform the control of the brake actuator 11 and the accelerator actuator 12, even in a case where the associated control object is a corner, for example. Furthermore, in a case where a guidance route has not been set (a case where a destination has not been set), the program determines that it is not necessary to perform driving guidance, even in a case where the associated control object is an intersection, for example.

Next, at S10, in a case where it has been determined that driving guidance and drive control of the vehicle 2 are necessary (YES at S10), the processing for the driving guidance and the drive control of the vehicle 2 is performed at S11 in accordance with the type of the control object. The specific nature of the guidance processing and the drive control processing is as described above.

On the other hand, in a case where it has been determined that the vehicle 2 has not reached the guidance and control starting point (NO at S8), as well as in a case where it has been determined that driving guidance and drive control of the vehicle 2 are not necessary (NO at S10), the program returns to S7 and once again computes the current remaining on-road distance (D2 - D1 - S) from the vehicle 2 to the control object.

Next, at S12, a determination is made as to whether or not the remaining on-road distance (D2 - D1 - S) to the control object that was computed at S7 has become zero, that is, whether or not the vehicle 2 has reached the location of the control object. In a case where it is determined that the vehicle 2 has reached the location of the control object (YES at S12), the driving support processing ends. In contrast, in a case where it is determined that the vehicle 2 has not reached the location of the control object (NO at S12), the program returns to S7 and once again computes the current remaining on-road distance (D2 - D1 - S) from the vehicle 2 to the control object.

As explained in detail above, in the driving support device 1 according to the first embodiment, in a case where it is determined that a road surface marking exists within the specified range from the vehicle 2 (YES at S2), the road surface marking is recognized based on the image that has been acquired by the rear camera 3 (S3), the on-road distance from the vehicle 2 to the control object that is associated with the road surface marking is computed (S5 to S7), and in a case where it has been determined that the on-road distance to the control object has become a specified distance (YES at S8), the driving guidance and the vehicle control are performed in accordance with the type of the associated control object (S 11), so it is not necessary to detect a control object such as a stop line, an intersection, or the like directly, and it is possible to compute the on-road distance from the vehicle to the control object accurately in an indirect manner, based on the result of the detection, at an early stage, of the road surface marking that is separated from the control object by a known distance. It is therefore possible to perform control reliably with respect to the control object without requiring an expensive device such as an image acquisition device or the like that uses a front camera to acquire an image of a distant object. Furthermore, in a case where the control object is detected directly as it is with the known technology, the guidance and control cannot be performed with respect to the control object if the control object cannot be recognized, but when the control object is detected indirectly based on the road surface marking, even in a case where one road surface marking cannot be detected, it is possible to perform the guidance and control with respect to the control object by detecting a different road surface marking that is associated with the same control object.
In addition, because it is possible to specify the position of the vehicle 2 accurately, the timing with which route guidance is provided can be made more accurate with respect to a location along a guidance route where guidance is necessary, such as an intersection or the like.
Furthermore, because the road surface marking recognition processing that is based on the image that is acquired by the rear camera 3 is performed only in a case where it has been determined that the road surface marking exists within the specified range from the vehicle 2, it is possible to keep the processing load on the navigation device 4 to a minimum. It is therefore possible to perform the processing in parallel with the processing for the navigation function that is the fundamental function of the navigation device 4, and the navigation device 4 can be configured from an inexpensive system, without requiring a separate control portion for the image processing.
Moreover, because it is not necessary to acquire an image of the control object directly, there is no concern that the control object will not be accurately recognized due to blurring that occurs when the image is acquired while the vehicle is in motion, even if the control object (for example, a stop line) includes a line segment that is orthogonal to the direction of the vehicle's movement.

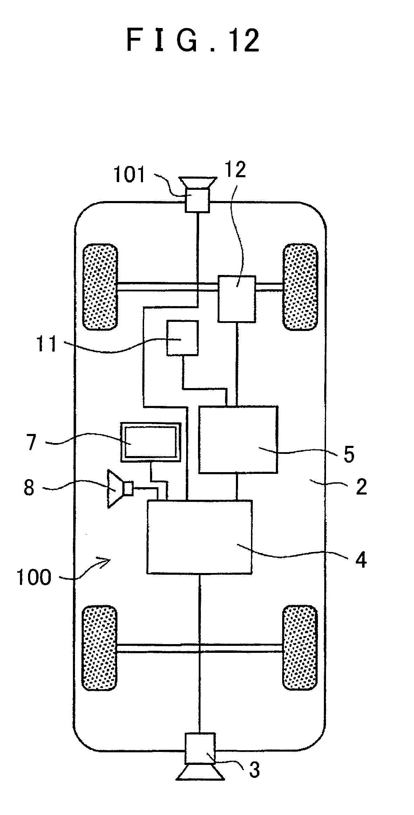

Second Embodiment Next, a driving support device 100 according to a second embodiment will be explained based on FIG. 12. Note that in the explanation that follows, reference numerals that are the same as those used in FIGS. 1 to 11 for the configuration of the driving support device 1 according to the first embodiment indicate portions that are the same as or equivalent to those in the configuration of the driving support device 1 according to the first embodiment.

A general configuration of the driving support device 100 according to the second embodiment is almost the same as the configuration of the driving support device 1 according to the first embodiment. Various types of control processing are also almost the same as the control processing in the driving support device 1 according to the first embodiment.
However, while the driving support device 1 according to the first embodiment is provided with the rear camera 3 that serves as the image acquisition means and that acquires the image of the area to the rear, and the driving support device 1 performs control with respect to the control object by performing recognition of the road surface marking based on the image that has been acquired by the rear camera, the driving support device 100 according to the second embodiment differs from the driving support device 1 according to the first embodiment in that it is provided with a front camera 101 that serves as the image acquisition means in addition to the rear camera 3 and that acquires an image of the area in front of the vehicle 2, and the driving support device 100 performs control with respect to the control object by performing recognition of the road surface marking based on the image that has been acquired by the front camera 101 in addition to that acquired by the rear camera 3.

First, the general configuration of the driving support device 100 according to the second embodiment will be explained using FIG. 12. FIG. 12 is a general configuration diagram of the driving support device 100 according to the second embodiment.
As shown in FIG. 12, the driving support device 1 according to the second embodiment is configured from the front camera 101, a rear camera 3, a navigation device 4, a vehicle ECU 5, and the like, that are installed on the vehicle 2.

The front camera 101 uses a solid-state imaging element such as a CCD or the like, for example, is attached near the upper middle portion of the license plate that is mounted on the front of the vehicle 2, and is installed such that its line of sight is directed somewhat below horizontal. The front camera 101 acquires images of traffic signals, road signs, road surface markings, and the like that are installed in front of the vehicle 2.

Note that the configuring elements other than the front camera 101, such as the rear camera 3, the navigation device 4, and the vehicle ECU 5, are the same as they are in the driving support device 1 according to the first embodiment that is described above, so explanations of those elements will be omitted.

As described below, the driving support device 100 according to the second embodiment is also capable of enlarging the image of the control object and increasing the rate of recognition of the road surface markings, based on the image that is acquired by the front camera 101.

For example, in a case where it has been determined, based on the image that has been acquired by the front camera 101, that a traffic signal that is located at an intersection that lies ahead has turned red, not only can the driving support device 100 perform the driving guidance and the drive control of the vehicle in accordance with the "intersection" control object as described above (S8 to S11), it is also capable of providing a warning that the traffic signal at the intersection has turned red, and it can control the brake actuator 11 such that the vehicle 2 stops before the intersection.

Furthermore, in a case where it has been determined, based on the image that has been acquired by the front camera 101, that a stop sign is installed at an intersection that lies ahead, not only can the driving support device 100 perform the driving guidance and the drive control of the vehicle in accordance with the "intersection" control object as described above (S8 to S11), it is also capable of providing a warning about the stop sign, and it can control the brake actuator 11 such that the vehicle 2 stops before the intersection.

In addition, in a case where it has been determined, based on the image that has been acquired by the front camera 101, that a road surface marking is formed on the road surface that lies ahead, the time at which the vehicle 2 will pass the road surface marking can be computed, and the recognition processing of the image that is acquired by the rear camera 3 at the computed time can be performed, such that the rate of recognition of the road surface marking is increased, even in a case where the rear camera 3, which has a narrow field of view, is used.

As explained in detail above, in the driving support device 100 according to the second embodiment, in a case where it is determined that a road surface marking exists within the specified range from the vehicle 2 (YES at S2), the road surface marking is recognized based on the image that has been acquired by the rear camera 3 (S3), the on-road distance from the vehicle 2 to the control object that is associated with the road surface marking is computed (S5 to S7), and in a case where it has been determined that the on-road distance to the control object has become a specified distance (YES at S8), the driving guidance and the vehicle control are performed in accordance with the type of the associated control object (S11), so it is not necessary to detect a control object such as a stop line, an intersection, or the like directly, and it is possible to compute the on-road distance from the vehicle to the control object accurately in an indirect manner, based on the result of the detection, at an early stage, of the road surface marking that is separated from the control object by a known distance.
Further, the driving guidance and the drive control of the vehicle can be performed in a manner that is more precisely suited to the current surroundings of the vehicle 2, based on an image analysis of the image of the area in front of the vehicle 2 that has been acquired by the front camera 101. Moreover, using the front camera 101 to recognize the road surface markings in advance makes it possible to increase the rate of recognition of the road surface markings, even in a case where the rear camera 3, which has a narrow field of view, is used.

Note that the present invention is not limited to the embodiments that are described above, and it is obvious that various types of improvements and modifications can be made within the scope of the present invention.
For example, in the first embodiment and the second embodiment, cases were explained in which the control object was a stop line, an intersection, and an entrance to a corner, but the control object is not limited to these examples and may also be a road surface marking such as a pedestrian crosswalk or the like, as well as a facility such as an interchange or the like.

## Claims

1. A driving support device that includes image acquisition means for acquiring an image of an area around a vehicle on which the image acquisition means is disposed and driving assistance means for assisting driving by a user based on the image that is acquired by the image acquisition means, the driving support device being **characterized by** comprising:
mark information storage means for storing location information for a road surface marking that is formed on a road surface;
road surface marking detection means for detecting the road surface marking that is formed on the road surface on which the vehicle is traveling, based on the image that is acquired by the image acquisition means; and
object distance computation means for computing an on-road distance from the vehicle to a control object that is associated with the detected road surface marking, based on the road surface marking that is detected by the road surface marking detection means and on the location information that is stored in the mark information storage means, wherein
the driving assistance means assists the driving of the user based on a computation result of the object distance computation means.

2. The driving support device according to claim 1, **characterized by** further comprising:
drive control means for performing drive control of the vehicle, wherein
the driving assistance means uses the drive control means to perform the drive control of the vehicle, based on the on-road distance from the vehicle to the control object.

3. The driving support device according to claim 1, **characterized by** further comprising:
driving guidance means for providing to the user guidance that pertains to driving, wherein
the driving assistance means uses the driving guidance means to perform the guidance, based on the on-road distance from the vehicle to the control object.

4. The driving support device according to any one of claims 1 to 3, **characterized by** further comprising:
current position detection means for detecting a current position of the vehicle; and
road surface marking existence determination means for determining whether a road surface marking exists within a specified range from the current position of the vehicle, based on a detection result of the current position detection means and on the location information that is stored in the mark information storage means, wherein
the road surface marking detection means performs detection of the road surface marking in a case where it is determined by the road surface marking existence determination means that the road surface marking exists.
